# FASCICULE DE BREVET EUROPEEN

(11) **EP 1 106 126 B1**
(45) Date de publication et mention de la délivrance du brevet: **17.09.2003**
(21) Numéro de dépôt: 00403398.1
(22) Date de dépôt: 04.12.2000
(51) Int. Cl.: A47J 31/46

(54) **Ensemble de distribution d'eau de machine à café espresso**
Wasserverteilungseinheit für eine Espresso-Kaffeemaschine
Water distributing unit for an espresso coffee machine

(30) Priorité: 01.12.1999 FR 9915233
(43) Date de publication de la demande: 13.06.2001
(73) Titulaire: SEB S.A., 69130 Ecully (FR)
(72) Inventeur: Morin, Gilles M., 14930 Vieux (FR)
(74) Mandataire: Kiehl, Hubert

(56) Documents cités:
- DE-C- 19 503 618
- FR-A- 818 729
- US-A- 4 156 437
- US-A- 5 207 149

## Description

L'invention qui va être décrite, se rapporte à une machine de préparation d'infusion, à savoir une cafetière de type « espresso ».

Les machines à café dites « espresso » sont conçues pour fonctionner suivant un nombre croissant de modes, correspondant à la préparation de différentes boissons ou au réchauffage de boissons déjà prêtes. Ainsi, la plupart des machines actuelles disposent d'une buse de distribution d'eau chaude ou de vapeur, fonctionnant en alternance avec le bloc d'infusion destiné à la préparation du café. Les circuits de distribution d'eau s'en trouvent compliqués, au-delà des difficultés déjà nombreuses d'organiser la circulation de l'eau suivant les différentes étapes de préparation des infusions de café.

D'une façon générale, l'invention vise une machine à café espresso comportant au moins un organe d'émission d'eau, au moins un organe de réception d'eau, au moins une canalisation d'eau émettrice et au moins deux canalisations d'eau réceptrices présentant chacune une extrémité d'entrée et une extrémité de sortie, et un distributeur d'eau recevant l'extrémité de sortie de la canalisation émettrice et les extrémités d'entrée des canalisations réceptrices, et destiné à autoriser sélectivement le passage de l'eau de la canalisation émettrice vers une canalisation réceptrice.

Pour gérer les flux d'eau en provenance et à destination de différents organes de la machine, les constructeurs utilisent communément des électrovannes commandées par un module électronique, le nombre des électrovannes nécessaires au fonctionnement de la machine s'accroissant rapidement avec le nombre de fonctions ou d'organes disponibles sur la machine. Les électrovannes utilisées sont nécessairement coûteuses, au regard des conditions de fonctionnement auxquelles elles sont soumises, à savoir par exemple la température et la dureté de l'eau, et la fiabilité demandée à un tel appareil. Il s'ensuit des coûts de fabrication augmentés de façon inacceptables, dès lors que la conception du bloc d'infusion nécessite une complexité supérieure des circuits d'alimentation en eau, ou que le nombre d'organes à desservir est accru. En outre, malgré la qualité et le dimensionnement des électrovannes utilisées, l'entartrag demeure un problème auquel il n'est pas remédié de façon satisfaisante.

Pour apporter un remède aux problèmes précédemment exposés, il est connu, par exemple, du document DE- C 19503618 de concevoir un distributeur comprenant une plaquette rotative, actionnée par un moteur électrique de façon à pouvoir prendre plusieurs positions angulaires par rapport aux extrémités des canalisations, ladite plaquette présentant un creusage conformé pour connecter sélectivement, suivant la position angulaire de la plaquette, l'extrémité de sortie d'une canalisation émettrice avec l'extrémité d'entrée d'une canalisation réceptrice.

Toutefois, un tel distributeur, de par sa construction, est limité dans la commande des flux d'eau tant en entrée qu'en sortie et ne peut être adapté à une multiplication des canalisations sans une fragilisation des plaquettes qui entraînerait leur destruction à court terme, et sans une augmentation des risques de fuite du fait de la multiplicité des extrémités des canalisations et de leur trop grande proximité.

L'invention a donc pour but de perfectionner ce type de distributeur pour lui permettre de piloter de façon fiable et économique une multiplicité de flux d'eau nécessaires à la confection de l'infusion et à la commande des nombreux organes mécanique de la machine.

Selon l'invention, le distributeur comprend un deuxième ensemble de deux plaquettes superposées, la première plaquette étant rotative, entraînée en rotation suivant un mouvement indexé sur le mouvement de la première plaquette du premier ensemble.

Ainsi, en utilisant un seul moteur électrique pour entraîner deux ensembles de deux plaquettes superposées et indexées, non seulement on réalise une économie de fabrication, mais aussi on garantit la fiabilité des connexions et combinaisons des flux d'eau en entrée et en sortie par la rigueur de l'indexage entre plaquettes.

D'autres caractéristiques et avantages de l'invention ressortiront de la description qui va suivre, donnée à titre d'exemple non limitatif, en référence aux dessins annexés dans lesquels :
- la figure 1 est une vue en perspective du distributeur d'une machine à café suivant l'invention ;
- La figure 2 est une coupe suivant la ligne A-A du distributeur suivant la figure 1 ;
- les figures 3a, 3b et 3c sont respectivement des vues de dessus, de face et de dessous d'une plaquette fixe utilisée dans le distributeur suivant le figure 1;
- les figures 4a, 4b et 4c sont respectivement des vues de dessus, de face et de dessous d'une plaquette fixe utilisée dans le distributeur suivant la figure 1 ;
- la figure 5 est une autre vue en perspective du distributeur suivant la figure 1.

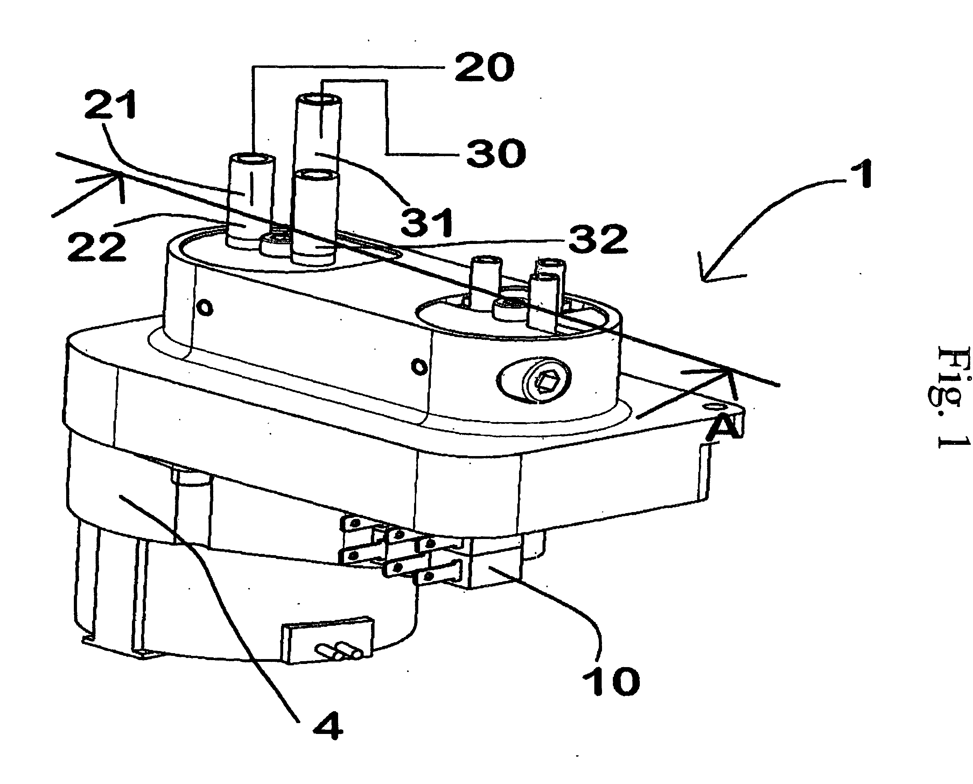

A la figure 1, on a représenté le distributeur d'eau 1 d'une machine à café espresso. Une machine à café de ce type comporte de façon classique au moins un organe d'émission d'eau 20, et au moins un organe de réception 30. L'organe d'émission d'eau 20 peut être, suivant le type de machine et la phase de préparation du café en cours, un réservoir d'eau froide, un organe de chauffage de l'eau tel un bloc thermique, ou autre. Quant à l'organe de réception d'eau 30, il peut s'agir, également suivant le type de machine et la phase de préparation du café en cours, de l'organe de chauffage de l'eau, d'un vérin de pressage, de la chambre d'infusion recevant la mouture de café et l'eau chaude, ou encore d'un réservoir de vidange. La plupart des machines actuelles disposant d'une buse de distribution de vapeur ou d'eau chaude, celle-ci constitue de la même façon l'un des organes récepteurs. Afin de permettre la circulation de l'eau entre un organe d'émission 20 d'une part, et un organe de réception 30 d'autre part, il est prévu au moins une canalisation dite « émettrice » 21, qui est issue de l'organe d'émission d'eau 20, et au moins une canalisation dite « réceptrice » 31 conduisant à l'organe de réception 30. Chacune desdites canalisations 21, 31 présente une extrémité d'entrée et une extrémité de sortie, le distributeur 1 recevant l'extrémité de sortie 22 des canalisations émettrices 21 et l'extrémité d'entrée 32 des canalisations réceptrices 31. Le distributeur 1 est destiné à autoriser sélectivement le passage de l'eau d'une canalisation émettrice 21 vers une canalisation réceptrice 31.

On conçoit aisément que la préparation de café dans une telle machine, d'autant plus si la machine est de type automatique, et la mise à disposition de l'utilisateur d'une buse de distribution de vapeur ou d'eau chaude, met en jeu un nombre important de canalisations émettrices et réceptrices, et nécessite en conséquence un nombre important de connexions entre ces canalisations. Il s'ensuit généralement une grande complexité de conception du distributeur, et un coût de fabrication et de montage élevé, les distributeurs de type connu utilisant un ensemble d'électrovannes commandées électroniquement. Le nombre d'électrovannes augmente très rapidement avec le nombre de combinaisons de connexion entre canalisations.

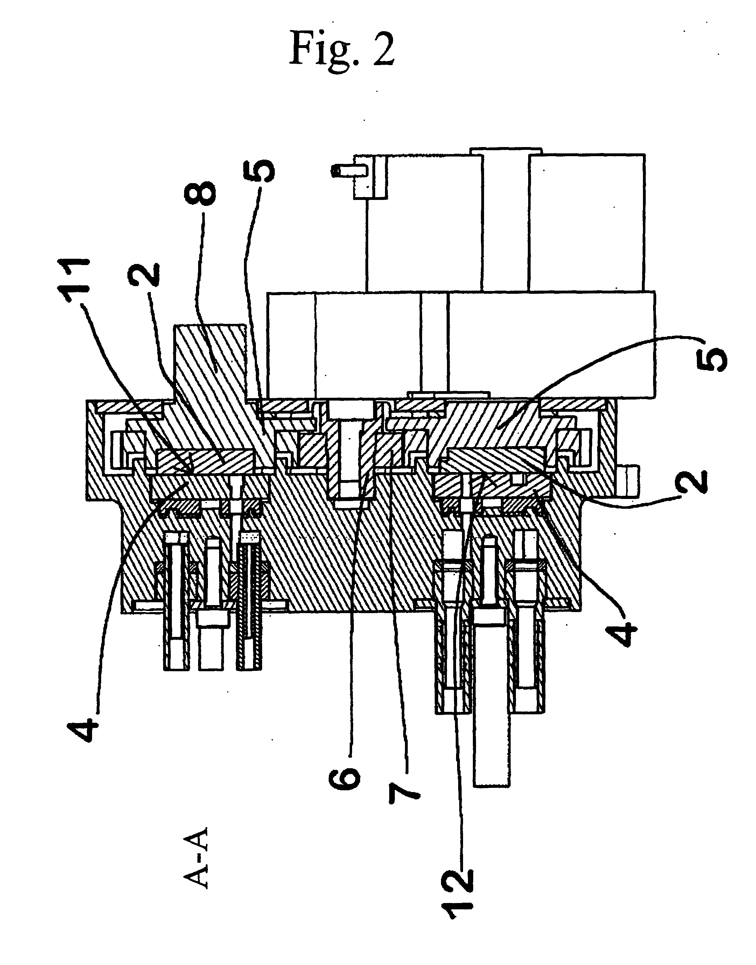

Comme cela apparaît mieux à la figure 2, l'invention propose de substituer à un distributeur de type connu utilisant un ensemble d'électrovannes, un distributeur 1 comprenant au moins une plaquette rotative 2, actionnée par un moteur électrique de façon à pouvoir prendre plusieurs positions angulaires par rapport aux extrémités 22, 32 des canalisations 21, 31, ladite plaquette 2 présentant un creusage 3 conformé pour connecter sélectivement, suivant la position angulaire de la plaquette 2, l'extrémité de sortie 22 d'une canalisation émettrice 21 avec l'extrémité d'entrée 32 d'une canalisation réceptrice 31.

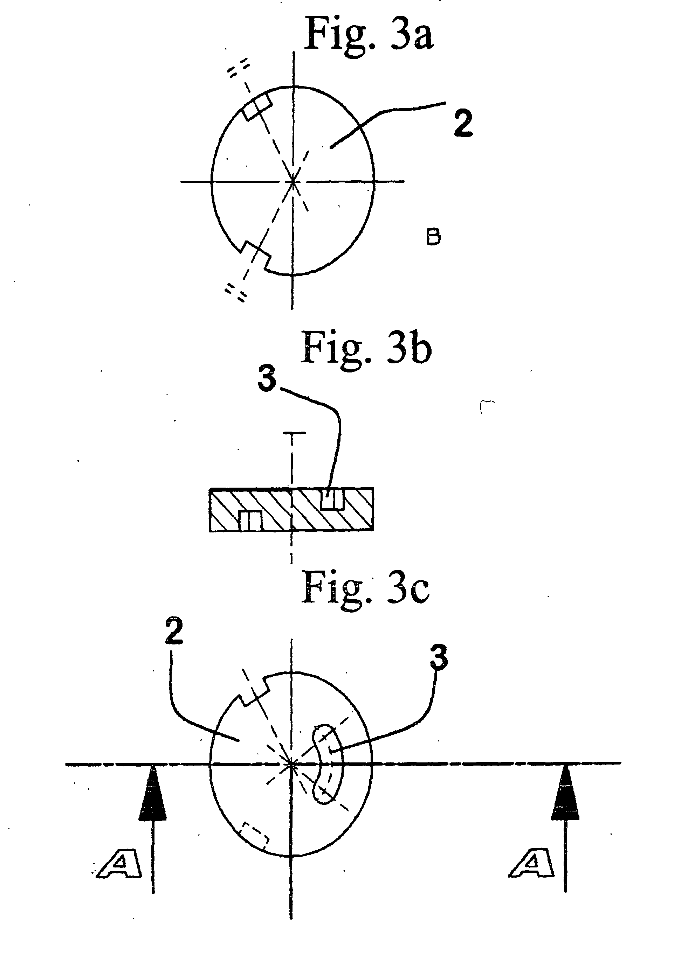

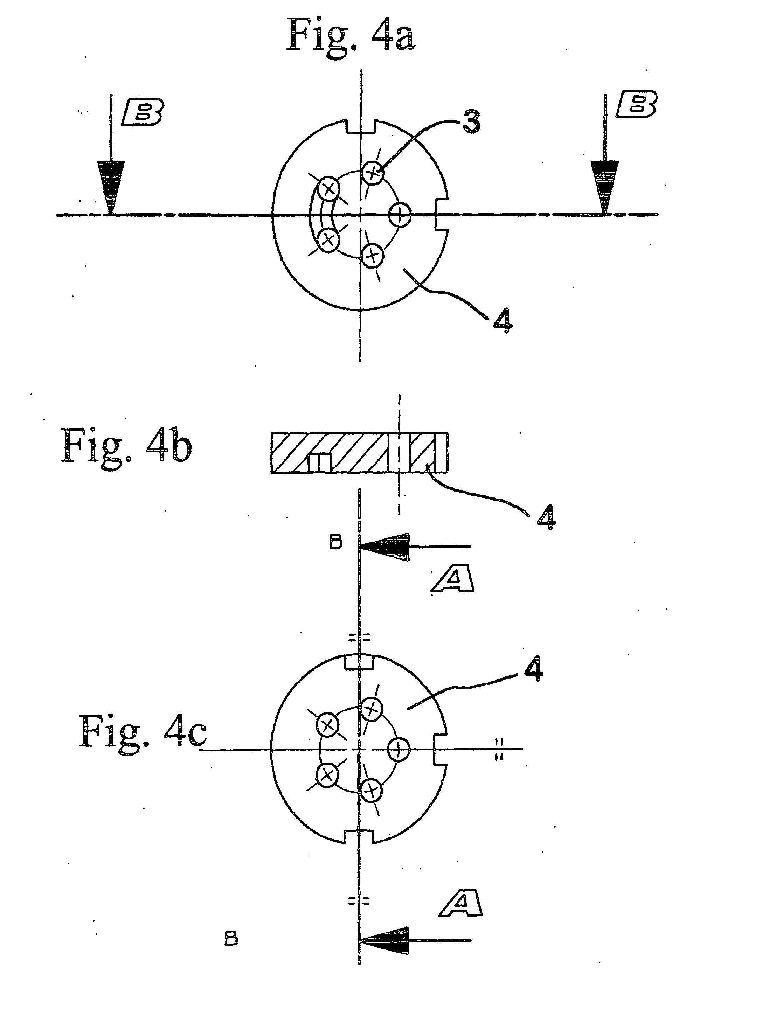

Suivant un mode préféré de l'invention, afin d'augmenter le nombre de connexions possibles entre les différentes canalisations, le distributeur 1 comprend un premier ensemble 11 de deux plaquettes 2, 4 superposées. La première plaquette 2, dont une représentation est donnée aux figures 3a à 3c, est rotative, actionnée par un moteur électrique de façon à pouvoir prendre plusieurs positions angulaires par rapport aux extrémités 22, 32 des canalisations 21, 31 ; la seconde plaquette 4, représentée seule aux figures 4a à 4c, est fixe par rapport aux extrémités 22, 32 des canalisations 21, 31. Chacune des plaquettes 2, 4 présente au moins un creusage 3 conformé pour connecter sélectivement, suivant la position angulaire de la première plaquette 2, l'extrémité de sortie 22 d'une canalisation émettrice 21 avec l'extrémité d'entrée 32 d'une canalisation réceptrice 31.

De préférence encore, le distributeur 1 comprend un deuxième ensemble 12 de deux plaquettes 2, 4 superposées, la première plaquette 2 étant rotative, entraînée en rotation suivant un mouvement indexé sur le mouvement de la première plaquette 2 du premier ensemble 11.

Les plaquettes 2, 4 sont réalisées dans un matériau céramique, qui procure non seulement une bonne résistance mécanique et thermique, mais aussi une grande stabilité dimensionnelle lors du vieillissement des pièces dans des conditions sévères de fonctionnement. En outre, un tel matériau assure une bonne étanchéité et un entartrage réduit.

Le mouvement simultané et proportionnel des deux plaquettes rotatives 2 est réalisé de la façon suivante : le moteur comprend un arbre de sortie 6 dont le mouvement est transmis, soit par l'intermédiaire d'un système réducteur, soit directement, à une roue d'entraînement 7 dentée, tandis que chacune des plaquettes mobiles 2 est portée par un plateau 5 crénelé, la roue d'entraînement 7 et chacun des plateaux 5 constituant une liaison par engrenage.

Suivant un mode de réalisation particulier, la machine à café espresso comprend au moins un organe de sélection actionné par l'utilisateur, et la position angulaire de la roue d'entraînement 7 dépend de la position de l'organe de sélection. Un organe de sélection est constitué, à titre d'exemple, d'un interrupteur à deux positions « marche » et « arrêt », une position spécifique des plaquettes 2, 4 étant affectée au mode « arrêt » ; un autre organe de sélection peut être constitué d'un bouton de commande rotatif, destiné à sélectionner entre un mode de préparation d'infusion, un mode de distribution d'eau chaude, ou encore un mode de distribution de vapeur.

Dans un mode de préparation de café, les plaquettes 2, 4 prennent des positions angulaires variables avec les phases de préparation, à savoir par exemple, une première position permettant le passage de l'eau entre le réservoir d'eau froide et le bloc thermique ; une deuxième position permettant l'écoulement de l'eau préalablement chauffée dans le bloc thermique, vers la chambre d'infusion, siège de la phase d'infusion ; une troisième position par laquelle l'eau résiduelle contenue dans le bloc thermique est purgée dans un réservoir de vidange.

Dans un mode de distribution d'eau chaude, une quatrième position des plaquettes 2, 4 autorise le passage de l'eau en sortie du bloc thermique vers la buse de distribution d'eau chaude, interdisant toute possibilité de circulation d'eau vers le vérin d'infusion.

Pour atteindre une très haute précision dans le positionnement angulaire des plaquettes, on peut prévoir que le moteur électrique soit de type pas-à-pas.

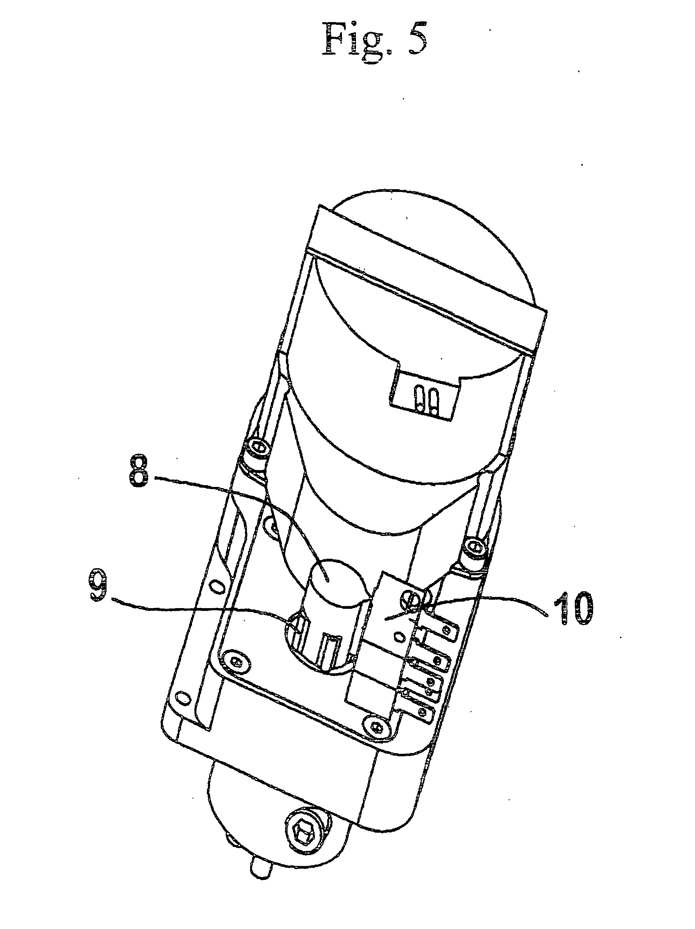

Alternativement, le moteur peut être de conception plus rudimentaire, par exemple de type synchrone ou universel, associé à au moins un interrupteur 10 d'alimentation du moteur électrique. Comme cela apparaît mieux en figure 5, une plaquette rotative 2 est alors solidaire d'un arbre 8, formé d'une pièce avec le plateau 5, sur la périphérie duquel est formée au moins une came 9 d'actionnement dudit interrupteur 10, de sorte que l'alimentation du moteur soit interrompue dès lors que ladite came 9 atteint une position angulaire correspondant à une position angulaire de consigne de la plaquette rotative 2, déterminée par la position de l'organe de sélection.

Cette disposition procure une grande simplicité de la commande du moteur, pour un positionnement angulaire relativement précis.

On le voit, l'invention apporte une simplification importante de la fonction de distribution d'eau dans une machine à café, cette simplification s'avérant indispensable dans la conception des machines actuelles compte tenu du nombre de modes de fonctionnement requis, et du niveau d'automatisation des processus de préparation d'infusion de plus en plus élevé.

## Revendications

1. Machine à café espresso comportant au moins un organe d'émission d'eau (20), au moins un organe de réception d'eau (30), au moins une canalisation d'eau émettrice (21) et au moins deux canalisations d'eau réceptrices (31) présentant chacune une extrémité d'entrée et une extrémité de sortie, et un distributeur d'eau (1) recevant l'extrémité de sortie (22) de la canalisation émettrice (21) et les extrémités d'entrée (32) des canalisations réceptrices (31), et destiné à autoriser sélectivement le passage de l'eau de la canalisation émettrice (21) vers une canalisation réceptrice (31) ; ; ledit distributeur (1) comprenant un premier ensemble (11) de deux plaquettes (2, 4) superposées, la première plaquette (2) étant rotative, actionnée par un moteur électrique de façon à pouvoir prendre plusieurs positions angulaires par rapport aux extrémités des canalisations (22, 32), la seconde (4) étant fixe par rapport aux extrémités (22, 32) des canalisations (21, 31), chacune desdites plaquettes (2, 4) présentant au moins un creusage (3) conformé pour connecter sélectivement, suivant la position angulaire de la première plaquette (2), l'extrémité de sortie (22) d'une canalisation émettrice (21) avec l'extrémité d'entrée (32) d'une canalisation réceptrice (31), **caractérisée en ce que** le distributeur (1) comprend un deuxième ensemble (12) de deux plaquettes (2, 4) superposées, la première plaquette (2) étant rotative, entraînée en rotation suivant un mouvement indexé sur le mouvement de la première plaquette (2) du premier ensemble (11).

2. Machine à café espresso selon la revendication 1, **caractérisée en ce que** le moteur comprend un arbre de sortie (6) dont le mouvement est transmis à une roue d'entraînement (7) dentée, tandis que chacune des plaquettes mobiles (2) est portée par un plateau (5) crénelé, la roue d'entraînement (7) et chacun des plateaux (5) constituant une liaison par engrenage.

3. Machine à café espresso selon la revendication 2, **caractérisée en ce qu'**elle comprend au moins un organe de sélection actionné par l'utilisateur, et que la position angulaire de la roue d'entraînement (7) dépend de la position de l'organe de sélection.

4. Machine à café espresso selon l'une quelconque des revendications 1 à 3, **caractérisée en ce que** le moteur électrique est de type pas-à-pas.

5. Machine à café espresso selon la revendication 3 ou 4, **caractérisée en ce qu'**elle comprend au moins un interrupteur (10) d'alimentation du moteur électrique, et que la plaquette rotative (2) est solidaire d'un arbre (8) sur la périphérie duquel est formée au moins une came (9) d'actionnement dudit interrupteur (10), de sorte que l'alimentation du moteur soit interrompue dès lors que ladite came (9) atteint une position angulaire correspondant à une position angulaire de consigne de la plaquette rotative (2), déterminée par la position de l'organe de sélection.

6. Machine à café espresso selon l'une quelconque des revendications 1 à 5, **caractérisée en ce que** les plaquettes (2, 4) sont réalisées dans un matériau céramique.

## Patentansprüche

1. Espresso-Kaffeemaschine mit mindestens einem Wasserabgabelement (20), mindestens einem Wasseraufhahmeelement (30), mindestens einem Wasserabgabekanal (21) und mindestens zwei Wasseraufnahmekanälen (31), die jeder ein Eingangsende und ein Ausgangsende aufweisen, und einem Wasserverteiler (1), der das Ausgangsende (22) des Abgabekanals (21) und die Eingangsenden (32) der Aufhahmekanäle (31) aufnimmt und dazu dient, den Durchtritt des Wassers vom Abgabekanal (21)zu einem Aufnahmekanal (31) selektiv zuzulassen, wobei der Verteiler (1) eine erste Anordnung (11) von zwei übereinander angeordneten Scheiben, (2,4) aufweist, von denen die erste Scheibe (2) drehbar und durch einen Elektromotor betätigt ist, so daß sie mehrere Winkelstellungen bzgl. der Enden der Kanäle (22, 32) einnehmen kann, und die zweite Scheibe (4) bzgl. der Enden (22, 32) der Kanäle (21, 31) feststehend ist, wobei jede der Scheiben (2,4) mindestens eine Aushöhlung (3) aufweist, die so geformt ist, daß sie selektiv gemäß der Winkelstellung der ersten Scheibe (2) das Ausgangsende (22) eines Abgabekanals (21) mit dem Eingangsende (32) eines Aufnahmekanals (31) verbindet, **dadurch gekennzeichnet, daß** der Verteiler (1) eine zweite Anordnung (12) von zwei übereinander angeordneten Scheiben, (2,4) aufweist, von denen die erste Scheibe (2) drehbar und gemäß einer auf die Bewegung der ersten Scheibe (2) der ersten Anordnung (11) indexierten Bewegung drehend angetrieben ist.

2. Espresso-Kaffeemaschine nach Anspruch 1, **dadurch gekennzeichnet, daß** der Motor eine Abtriebswelle (6) aufweist, deren Bewegung auf ein Antriebszahnrad (7) übertragen wird, während jede der beweglichen Scheiben (2) von einer gezahnten Scheibe (5) getragen ist, wobei das Antriebsrad (7) und jede der Scheiben (5) eine Zahneingriffsverbindung bilden.

3. Espresso-Kaffeemaschine nach Anspruch 2, **dadurch gekennzeichnet, daß** sie mindestens ein vom Benutzer betätigtes Wählelement aufweist und daß die Winkelstellung des Antriebsrades (7) von der Stellung des Wählelements abhängt.

4. Espresso-Kaffeemaschine nach einem der Ansprüche 1 bis 3, **dadurch gekennzeichnet, daß** der Elektromotor vom Typ Schrittmotor ist.

5. Espresso-Kaffeemaschine nach den Ansprüchen 3 oder 4, **dadurch gekennzeichnet, daß** sie mindestens einen Schalter (10) für die Speisung des Elektromotors aufweist und daß die drehbare Scheibe (2) fest mit einer Welle (8) verbunden ist, an deren Umfang mindestens ein Nocken (9) zur Betätigung des Schalters (10) gebildet ist, so daß die Stromversorgung des Motors unterbrochen wird, sobald der Nocken (9) eine Winkelstellung erreicht, die einer Soll-Winkelstellung der drehbaren Scheibe (2) entspricht, welche durch die Stellung des Wählelements bestimmt ist.

6. Espresso-Kaffeemaschine nach einem der Ansprüche 1 bis 5, **dadurch gekennzeichnet, daß** die Scheiben (2,4) aus einem Keramikmaterial hergestellt sind.

## Claims

1. Espresso-coffee machine including at least one water-issuing member (20), at least one water-receiving member (30), at least one issuing water duct (21) and at least two receiving water ducts (31) each featuring an inlet end and an outlet end, and a water distributor (1) receiving the outlet end (22) of the issuing duct (21) and the inlet ends (32) of the receiving ducts (31), and intended selectively to allow the water to pass from the issuing duct (21) to a receiving duct (31); the said distributor (1) comprising a first set (11) of two superimposed plates (2, 4) the first plate (2) being rotary, actuated by an electric motor so as to be able to take up several angular positions with respect to the ends of the ducts (22, 32), the second (4) being fixed with respect to the ends (22, 32) of the ducts (21, 31), each of the said plates (2, 4) featuring at least one hollowed area (3) shaped so as, depending on the angular position of the first plate (2), selectively to connect the outlet end (22) of an issuing duct (21) with the inlet end (32) of a receiving duct (31), **characterised in that** the distributor (1) comprises a second set (12) of two superimposed plates (2, 4), the first plate being rotary, driven in rotation following a movement indexed to the movement of the first plate (2) of the first set (11).

2. Espresso-coffee machine according to Claim 1, **characterised in that** the motor comprises an output shaft (6) the movement of which is transmitted to a toothed drive wheel (7), while each of the movable plates (2) is carried by a castellated plate (5), the drive wheel (7) and each of the plates (5) constituting a link by meshing.

3. Espresso-coffee machine according to Claim 2, **characterised in that** it comprises at least one selection member actuated by the user, and **in that** the angular position of the drive wheel (7) depends on the position of the selection member.

4. Espresso-coffee machine according to any one of claims 1 to 3, **characterised in that** the electric motor is of the stepper type.

5. Espresso-coffee machine according to Claim 3 or 4, **characterised in that** it comprises at least one power-supply switch (10) for the electric motor, and **in that** the rotary plate (2) is secured to a shaft (8) on the periphery of which is formed at least one cam (9) for actuating the said switch (10), such that the power supply to the motor is cut off as soon as the said cam (9) reaches an angular position corresponding to an angular datum position of the rotary plate (2), determined by the position of the selection member.

6. Espresso-coffee machine according to any one of Claims 1 to 5, **characterised in that** the plates (2, 4) are produced from a ceramic material.
